# EUROPÄISCHE PATENTANMELDUNG

(11) **EP 0 866 314 A1**
(43) Veröffentlichungstag der Anmeldung: **23.09.1998**
(21) Anmeldenummer: 98103080.2
(22) Anmeldetag: 21.02.1998
(51) Int. Cl.: G01D 9/30, G01D 15/16

(54) **Prozessschreiber mit Punktdruckkopf**

(30) Priorität: 22.03.1997 DE 19712126
(71) Anmelder: Hartmann & Braun GmbH & Co. KG, 65760 Eschborn (DE)
(72) Erfinder: Thönebe, Werner, 30890 Barsinghausen (DE)

(57) **Zusammenfassung**

Die Erfindung betrifft einen Prozeßschreiber zur Online-Aufzeichnung von Prozeß-Meßdaten, wobei der Schreiber selbst einen Punktdruckkopf aufweist gemäß Oberbegriff des Patentanspruchs 1.
Um eine Schreiberanordnung mit Punktdruckkopf der gattungsgemäßen Art dahingehend weiterzubilden, daß mit mechanisch bzw. elektromechanisch einfachen Mitteln der gesamte Druckvorgang einfacher bewerkstelligt werden kann, ist erfindungsgemäß vorgeschlagen,
daß die Druckbetätigung des Punktdruckkopfes sowie die Betätigung der Stiftenwalze über einen gemeinsamen Schrittmotor bewerkstelligt wird, indem der Schrittmotor mit mechanischen Mitteln versehen ist, über welche der Schrittmotor in einer Drehrichtung drehschlüssig und in der entgegengesetzten Richtung drehsperrend mit der Stiftenwalze gekoppelt ist, so daß in einer Drehrichtung des Schrittmotors lediglich die Stiftenwalze betätigbar und in der anderen Drehrichtung der gesamte Punktdruckkopf zum Drucken absenkbar ist.

## Beschreibung

Die Erfindung betrifft einen Prozeßschreiber zur Online-Aufzeichnung von Prozeß-Meßdaten, wobei der Schreiber selbst einen Punktdruckkopf aufweist gemäß Oberbegriff des Patentanspruchs 1.

Prozeßschreiber werden überall dort eingesetzt, wo zum Teil umfangreich geregelte Prozesse, beispielsweise in der chemischen Industrie, online überwacht werden müssen. Hierzu werden von entsprechend verteilten Meßwertgebern die Prozeßdaten vor Ort in situ aufgenommen und an eine Leitstelle, beispielsweise eine SPS, übertragen. Entweder am Ort der zentralen Leitstelle oder dort, wo in den Prozeß regelnd eingegriffen werden kann, sind Prozeßschreiber angeordnet, welche die Meßdaten als Funktion der Zeit oder als Funktion anderer Parameter aufzeichnen. Dabei unterscheidet man im allgemeinen zwei verschiedene Arten von Prozeßdatenschreibern, nämlich Linienschreiber und Punktschreiber. Linienschreiber zeichnen die Prozeßdaten kontinuierlich mit entsprechend angesteuerten Schreibnadeln auf. Bei Mehrlinienschreibern werden mehrere Prozeßdaten auf einem Schreiber gleichzeitig aufgezeichnet. Bei Linienschreibern sind demzufolge mehrere Schreibnadeln vorgesehen. Bei der zweiten Kategorie von Schreibern, nämlich bei den Punktschreibern, können auch eine oder mehrere Prozeßdaten in ihrem zeitlichen oder parameterabhängigen Verlauf dargestellt werden. Die einzelnen Aufzeichnungslinien bestehen dabei jedoch nicht aus kontinuierlich durchgezogenen Linien, sondern aus diskreten Punkten, die in ihrer Aneinanderreihung zwar diskrete Meßpunkte darstellen, jedoch einen quasi kontinuierlichen Meßwertverlauf darstellen. Die Meßdaten werden hierbei über mehrere, der Anzahl der parallel aufgezeichneten Meßwerte entsprechenden Anzahl eingespeist und entsprechend verarbeitet. In dem Falle, in dem mehrere Meßwertverläufe dargestellt werden sollen, im Sinne eines Mehrlinienschreibers, wird der Druckkopf für jeden Meßwert versetzt. Zur Unterscheidung bzw. Kenntlichmachung unterschiedlicher Meßwetverläufe werden beim eigentlichen Schreib-bzw. Druckvorgang auch unterschiedliche Farben verwendet. Bei Verwendung eines Punktdruckkopfes wird derselbe bzw. die Druckspitze zuerst in die entsprechende Position gefahren, die dem Meßwertausschlag und dem entsprechenden Meßwertkanal entspricht, und sodann zum Drucken des entsprechenden Meßpunktes kurzzeitig oder impulsartig abgesenkt.

Bei herkömmlichen Punktdruckköpfen werden die beiden Arbeitsschritte,
1. Positionieren des entsprechenden Farbstiftes,
2. impulsartiges Absenken zum Drucken des Druckpunktes,
nacheinander mit unterschiedlichen solenoiden Mitteln ausgeführt. Dies führt bei Punktschreibern der herkömmlichen bekannten Art zu einem erheblichen Aufwand an mechanischen Teilen. Dadurch wird die gesamte Schreiberanordnung zum einen montageaufwendig und zum anderen störanfällig.

Der Erfindung liegt somit die Aufgabe zugrunde, eine Schreiberanordnung mit Punktdruckkopf der gattungsgemäßen Art dahingehend weiterzubilden, daß mit mechanisch bzw. elektromechanisch einfachen Mitteln der gesamte Druckvorgang einfacher bewerkstelligt werden kann.

Die gestellte Aufgabe ist bei einer Schreiberanordnung mit Punktdruckkopf der gattungsgemäßen Art durch die kennzeichnenden Merkmale des Patentanspruchs 1 gelöst.

Weitergehende Ausgestaltungsformen der Erfindung sind in den Unteransprüchen angegeben.

Der Kern der Erfindung besteht im wesentlichen darin, daß die Positionierung des gewünschten, auf einer Trommel mit mehreren Farbstiften angeordneten Stiftes sowie der eigentliche Punktdruckvorgang mit Hilfe eines einzigen Schrittmotors bewerkstelligt wird. Dies geschieht dadurch, daß ein Schrittmotor mit der Farbstifttrommel bzw. dem Punktdruckkopf drehfest derart verbunden ist, daß in einer Drehrichtung des Schrittmotors eine Drehung des Punktdruckkopfes und in entgegengesetzter Richtung des Schrittmotors das impulsartige Absenken des gesamten Druckkopfes durchgeführt wird. Dabei sind die mechanischen Übertragungsmittel zwischen Schrittmotor und Punktdruckkopf in einer Richtung drehfest und in der anderen Richtung sperrend. Des weiteren enthält der Schrittmotor beidseitig Abtriebe, wobei am dementsprechend anderen Abtrieb dann eine, in der entsprechend entgegengesetzten Drehrichtung wirkende Exzenterbeaufschlagung erfolgt. Über die Exzenterbeaufschlagung wird der Druckkopf dann zum Dtuckvorgang impulsartig abgesenkt. Die Vorteile der Erfindung liegen darin, daß mit Hilfe eines einzigen Schrittmotors und der entsprechend erfindungsgemäßen Kopplung an die zwei verschiedenen drehrichtungsabhängigen mechanischen Mittel auf einen weiteren Schrittmotor verzichtet werden kann. Darüber hinaus wird über die Exzenteransteuerung der Druckvorgang so vereinfacht, daß erheblich weniger Teile notwendig sind. Dadurch wird im übrigen auch die gesamte Schreiberanordnung unempfindlicher. Durch den Wegfall von sonst üblichen mechanischen und/oder elektromechanischen Elementen wird die Anordnung außerdem auch leichter zugänglich.

Die Erfindung ist in der Zeichnung dargestellt und im nachfolgenden näher beschrieben.
Es zeigt:
- Figur 1 :: Ausführungsbeispiel mit Schrittmotor mit 2 Wellenabtrieben.
- Figur 2 :: Ausführungsbeispiel mit drehrichtungsabhängigen Hemmelementen jedoch nur in Frontalansicht

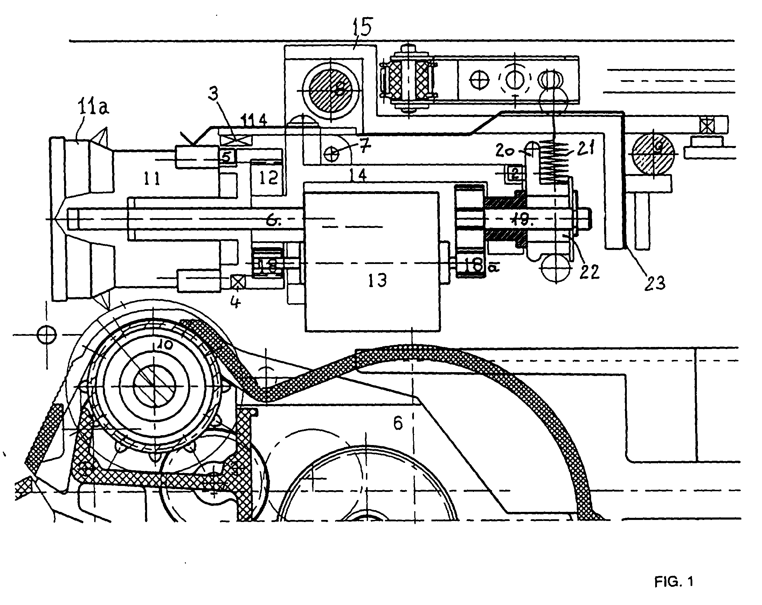

Figur 1 zeigt ein erstes Ausführungsbeispiel der Erfindung. Die Schreiberanordnung ist in der Figur 1 im wesentlichen auf die wichtigen Elemente beschränkt. Dabei ist ein sternförmiger Druckkopf 11 dargestellt, der auf einer Stiffenwalze 10 mehrere Meßwerte in verschiedenen Farben als gepunktete Linie aufzeichnen kann. Um die Aufzeichnungsbreite des auf der Stiftenwalze 10 geführten Schreiberpapieres überstreichen zu können, wird ein Schlitten 15 auf den Achsen 8 und 9 parallel zur Stittenwalze geführt. An diesem Schlitten hängt, mit dem Gelenk 7 verbunden, die eigentliche Druckvorrichtung. Eine Wippe 14 ist in ihrem frontseitigen Schenkel mit einer Achse 6 fest bestückt. Auf diese Achse ist ein innen verzahntes Kunststoffzahnrad 12 drehbar gelagert. Der Druckkopf 11 ist dabei auf diese genannte Achse 6 ebenfalls aufgeschoben und mit einer nicht dargestellten Rastung axial behalten. Der Druckkopf 11 ist nach dem Aufschieben in der entsprechend dargestellten Weise mit dem Zahnrad 12 über eine Mitnehmernase 5 einseitig anschlagend verbunden, so daß bei einer Rechtsdrehung des Zahnrades 12 der Druckkopf dieser Bewegung folgt. Ausgelöst wird diese Drehbewegung durch den Schrittmotor 13, dessen Ritzel 18 in die Innenverzahnung des Zahnrades 12 eingreift. Ein im Zahnrad 12 eingesetzter Magnet 4 signalisiert beim Passieren des Hall-Sensors 3 dem Prozessor der Schreiberanordnung die farblich richtige Zuordnung des Druckkopfes. Da der Druckkopf beispielsweise sechs Farbspitzen am Umfang verteilt aufweist, muß der Schrittmotor diesen beim Wechsel der Meßstelle um jeweils 60° weiterdrehen. Die darauf fällige Dtuckbewegung, d. h. das Absenken des Druckkopfes 11 wird durch eine Rückwärtsbewegung des Schrittmotors 13 ausgelöst. Dabei dreht das Ritzel 18a die Welle 19 linksherum, so daß der Exzenter 20 den Abstand zwischen Schlitten und Wippe 14 freigibt, wodurch die Zugfeder 21 die Wippe nach oben ziehen kann bzw. den Druckkopf 11 auf die Stiftenwalze 10 absenken kann. Damit ist ein dokumentierter, aufgezeichneter Meßvorgang beendet. Durch das Rechtsdrehen des Motors wird der Exzenter 20 wieder freigegeben und die Zugfeder 21 richtet die Wippe 14 wieder in die Waagerechte. Da der Schrittmotor nun die nächste Farbe rechtsdrehend einstellen muß, der Exzenter 20 jedoch in seiner Position verharren muß, ist der Exzenter auf einem Freilauf 22 gelagert, so daß trotz weiterer Rechtsdrehung des Motors der Exzenter an seinem Anschlag 2 zurückbleiben kann.

Ist die nächste Farbspitze in Druckposition gedreht, so wird der Druckkopf von der Blattfeder 114 in seiner Lage fixiert, so daß sich das Zahnrad 12 mit seinem rechtsseitigen Anschlag 5 linksdrehend zu einem erneuten Absenkvorgang hinbewegt. Die erforderliche Steuerung des Schrittmotors 13 wird über ein Kupferflachband 23 vorgenommen, mit dem ebenfalls der Hall-Sensor 3 kontaktiert ist.

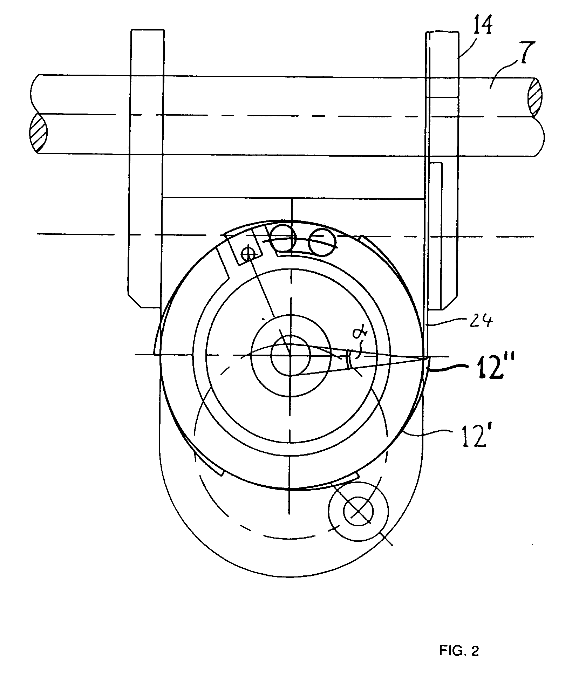

Ein weiteres Ausführungsbeispiel der Erfindung ist in Figur 2 dargestellt. Figur 2 zeigt jedoch lediglich die wesentlichen Elemente, die gegenüber einer Anordnung nach Figur 1 auszutauschen sind.

In dieser in Figur 2 dargestellten Ausführungsform der Erfindung können die in Figur 1 am zweiten Abtrieb des Schrittmotors angeordneten Bauteile 18a, 19, 20, 21, 22, über welche die drehrichtungsabhängige Hemmung bewerkstelligt wurde, entfallen. Stattdessen ist am Außenumfang des Hohlrades 12' eine Sägezahnkontur 12'' angeordnet, die der Transportdrehrichtung der Stiftenwalze entgegengerichtet ist. Für den Vorgang des Druckens, bei dem der Schrittmotor 13 rückwärts läuft, wird das Hohlrad 12' durch eine Blattfeder 24 in seiner Drehbewegung blockiert, bzw gehemmt, weil die Blaffeder 24 hinter einen Zahn der Sägezahnkontur 12'' greift. Dadurch entsteht durch das erzeugte Drehmoment des Schrittmotors 13 eine Ausweichbewegung der Wippe 14 um die Achse 7, um den Winkel α, d.h. in diesem konstruktiven Fall nach unten. Dadurch entsteht durch mechanisch sehr einfache Mittel die Ausführung der Druckbewegung. Diese Druckbewegung wird gemäß dem Wesen der Erfindung nur in einer Drehrichtung des Schrittmotors erzeugt. In der entgegengesetzten Drehrichtung erfolgt dann lediglich die Betätigung der Stiftenwalze zur Auswahl des gewünschten Farbstiftes. Somit kann auch hierbei mit Hilfe eines einzigen Schrittmotors sowohl die Stiftenwalze zur Auswahl des Farbstiftes als auch der Dtuckvorgang selbst betätigt werden.
Da das Hohlrad 12' sechs Zähne aufweist, kann nach jeder Stifteinstellung im Rückwärtlauf die Druckbewegung sofort eingeleitet werden. Sind nicht alle sechs Meßstellen angeschlossen, dann kann die Printposition, optisch durch den Sägezahn gekennzeichnet, beliebig übersprungen werden.

## Patentansprüche

1. Prozeßschreiber zur Online-Aufzeichnung von Prozeßmeßdaten, mit einem über einen Schrittmoter betätigbaren Punktdruckkopf, sowie mit einer mehrere Stifte aufnehmenden, auf dem Punktdruckkopf angeordneten Stiftenwalze, und einem Aufzeichnungsmedium,
dadurch gekennzeichnet,
daß die Druckbetätigung des Punktdruckkopfes (11) sowie die Betätigung der Stiftenwalze (11a) über einen gemeinsamen Schrittmotor (13) bewerkstelligt wird, indem der Schrittmotor mit mechanischen Mitteln versehen ist, über welche der Schrittmotor in einer Drehrichtung drehschlüssig und in der entgegengesetzten Richtung drehsperrend mit der Stiftenwalze (11a) gekoppelt ist, so daß in einer Drehrichtung des Schrittmotors (13) lediglich die Stiftenwalze (11a) betätigbar und in der anderen Drehrichtung der gesamte Punktdruckkopf (11) zum Drucken absenkbar ist.

2. Prozeßschreiber zur Online-Aufzeichnung von Prozeßmeßdaten nach Anspruch 1,
dadurch gekennzeichnet,
daß der Schrittmotor (13) an den zwei gegenüberliegenden Enden in axialer Richtung zwei Abtriebe (18, 18a) aufweist.

3. Prozeßschreiber zur Online-Aufzeichnung von Prozeßmeßdaten nach Anspruch 2,
dadurch gekennzeichnet,
daß die impulsartige Absenkung des Druckkopfes (11) zum Drucken eines Punktes durch einen, an dem entsprechenden Abtrieb (18a) drehfest angeordneten Exzenter ertolgt, wobei der Exzenter nur in einer Drehrichtung eine Absenkung bewirkt.

4. Prozeßschreiber zur Online-Aufzeichnung von Prozeßmeßdaten nach Anspruch 1,
dadurch gekennzeichnet,
daß die Welle des Schrittmotors (13) drehfest mit einem Hohlrad (12') gekoppelt ist, welches an seinem Außenmantel mit einer umlaufenden Sägezahnkontur (12'') versehen ist.

5. Prozeßschreiber zur Online-Aufzeichnung von Prozeßmeßdaten nach Anspruch 4,
dadurch gekennzeichnet,
daß ein zungenartiges federndes Element (24) an der Sägezahnkontur (12'') derart anliegt, daß in einer Richtung die Drehbewegung der Schrittmotorwelle zugelassen wird, und in der entgegengesetzten Drehrichtung die Drehbewegung gehemmt wird.

6. Prozeßschreiber zur Online-Aufzeichnung von Prozeßmeßdaten nach Anspruch 5,
dadurch gekennzeichnet,
daß der Schrittmotor (13) auf einer Wippe (14) angeordnet ist, und das zungenartige Element (24) demgegenüber ortsfest angeordnet ist, derart, daß in der gehemmten Drehrichtung das Antriebsmoment des Schrittmotors (13) bewirkt, daß der Schrittmotor mitsamt der Wippe (14) sich an dem zungenartigen Element abstützend zum Drucken zumindest kurzzeitig nach unten senkt.
